# EUROPEAN PATENT APPLICATION

(11) **EP 2 499 929 A2**
(43) Date of publication of application: **19.09.2012**
(21) Application number: 12250032.5
(22) Date of filing: 15.02.2012
(51) Int. Cl.: A44B 19/12, B29D 5/06

(54) **Double layer coiling zipper and zipper slider**

(30) Priority: 30.05.2011 TW 100209711; 07.04.2011 CN 201110088172; 15.03.2011 CN 201120069952 U
(71) Applicant: Genmore Zipper Corporation, Sulin District T'ai pei 238 (TW)
(72) Inventor: Wang, Lien-Chou, New Taipei City 238 (TW)
(74) Representative: Whitaker, Iain Mark

(57) **Abstract**

A double coil layer zipper having each coil-supporting bigger filter cord thereof compacted to provide an extended side edge that is stopped against the coil heads of the respective series of coils, and the coil body of each coil of the interlocking series of teeth thereof configured to provide a recessed face and two opposing side flanges that enhance the locking tightness between the left-handed and right-handed series of coils. The zipper slider of the double coil layer zipper has a front balance tongue for guiding the left-handed and right-handed series of coils between the jointing position and the opening position smoothly.

## Description

### BACKGROUND OF THE INVENTION

### a) Field of the invention

The present invention relates to zippers and more particularly, to a double layer coiling zipper, which has the left-handed and right-handed series of coils thereof processed through a thermal shape-reformed compression process to enhance coil engagement tightness and has the center block of the zipper slider thereof provided with a front balance tongue tor guiding the left-handed and right-handed series of coils between the jointing position and the opening position smoothly.

### b)Description of the Related Art

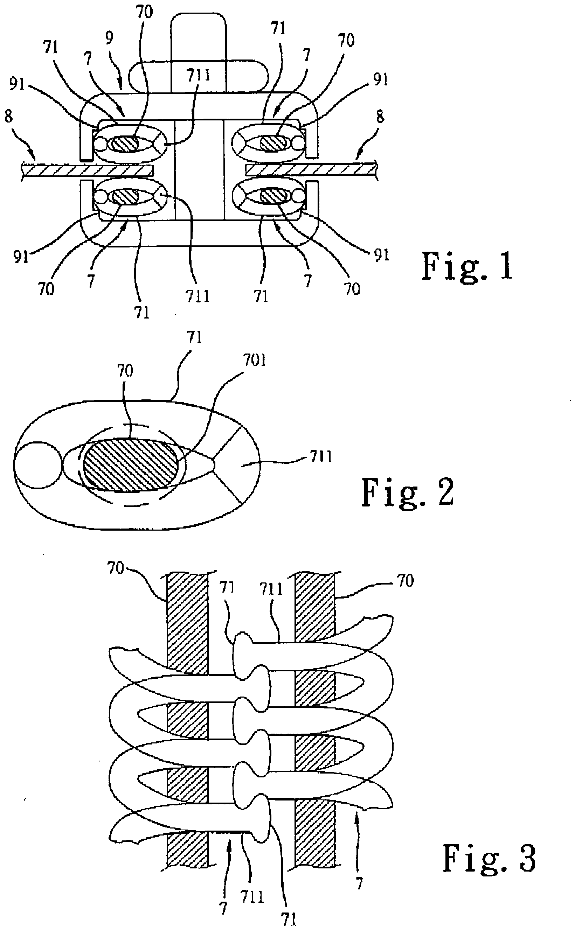

Regular coiling zippers are commonly of a single layer design, comprising two zipper chain tapcs and an interlocking series of teeth stitched to each of the two zipper chain tapes. Taiwan Patent Publication Number 441257 discloses a double coil layer zipper design entitled "Improved structure of coiling zipper". However, this patent was invalid after June 15, 2004 due to nonpayment of renewal annuity. China Patent ZL00233580.8 discloses a double coil layer zipper, as shown in FIGS. 1-3, which was invalid after 2005. According to this design, one side of the filler cord 70 is kept away from the coil head 711 of the associating coils 71 (see FIG. 3). When stitching the zipper chain tapes and the series of coils 7 together, the stitching needle may be stuck in the series of coils 7. To avoid this problem, upper and lower series of coils 7 may be stitched to each zipper tape 8, and then the two zipper chain tapes 8 are fastened together to form a complete zipper. However, this method is complicated. Further, the left-handed series of coils and the right-handed series of coils may be not kept perfectly straight and smooth. Further, the H-shaped slide guide groove 91 in the upper and lower chambers inside the zipper slider 9 do not fit the configuration of the coil heads 711 of the series of coils. When pulling the zipper slider 9, the left-handed and right-handed series of coils 7 may be not accurately interlocked, causes to sliding obstruction and affecting zipper safety.

Further, China Patent ZL200820082747.6 discloses a coil layer zipper design entitled "Tadpole-shaped interlocking teeth". This design of coil layer zipper eliminates the drawbacks of the aforesaid conventional coiling zippers. However, this design of coil layer zipper still has room for improvement.

### SUMMARY OF THE INVENTION

The present invention has been accomplished under the circumstances in view. It is therefore the main object of the present invention to provide a double coil layer zipper, which has the bigger filler cord of each series of interlocking teeth to be compacted so that one extended lateral side edge of the bigger fillet cord is stopped against the coil heads of the corresponding series of coils, enabling the left-handed and right-handed series of coils to be accurately interlocked, avoiding loosening.

It is another object of the present invention to provide a double coil layer zipper, which has C-shaped guide grooves defined in the zipper slider for guide the upper and lower interlocking series of coils forwards or backwards smoothly, and therefore when the double layer coiling zippers installed in a corner area of a luggage, tent, or any of a variety of other articles, the interlocking series of coils can be accurately and positively jointed or open,

Next designed object of the present invention to provide a double coil layer zipper, which has a front balance tongue with guide grooves formed at the front side of the filler block of the zipper slider for guiding the coil heads of the series of coils smoothly between the jointing position and the opening position.

Next another object of the present invention to provide a double coil layer zipper, which has the coil body of each coil element of the left-handed and right-handed series of coils be deformed during a thermal shape-reformed compression process that is applied to reform the shape of the coil elements of the left-handed and right-handed series of coils, forming a collar having expanded flanges at two opposite lateral sides, so that when the left-handed and right-handed series of coils are interlocked, the coil head of one respective left-handed series of coil is stopped against one expanded flange of the collar of each of two coil elements of the mating right-handed series of coils, enhancing interlocking tightness.

Next another object of the present invention to provide a double coil layer zipper, which has an adhesive be applied to the lines of stitches of the double layer coiling zipper prior during fabrication, so that the applied adhesive can be cured to affix looping sewing thread-joint points of the line of adhesive-wetted stitches in place during the application of a thermal shape-reformed compression process to reform the shape of the coil elements of the left-handed and right-handed series of coils, enhancing zipper coil strength and wearing resistance and preventing breaking of the lines of adhesive-wetted stitches during transportation of the finished product.

Next another object of the present invention to provide a double coil layer zipper, which slider has rollers provided in the zipper slider between the top slide body block and bottom slide body block of the zipper slider with the peripheral surfaces thereof kept in contact with the left-hattded and right-handed series of coils, assuring accurate and positive engagement between the left-handed and right-handed series of coils.

Next another object of the present invention to provide a double coil layer zipper, which has the zipper slider configured for allowing replacement of the pull tab so that different pull tabs can be selectively attached to the zipper slider to satisfy different clients.

Next another object of the present invention to provide a double coil layer zipper which has an UV curable adhesive dispensed through a dispensing nozzle into the concave gap in each zipper chain tapes and then cured by ultraviolet rays to form a coating on each zipper tape, providing waterproof, airtight and unbroken functions.

### BRIEF DESCRIPTION OF THE DRAWING

FIG 1 is a sectional view of a double layer coiling teeth according to the prior art.
FIG. 2 is a schematic sectional view of one coil element for double layer coiling zipper according to the prior art.
FIG. 3 is a plain view illustrating a left-handed series of coil-type coiling teeth and a right-handed series of coil-type coiling teeth of a double layer coiling zipper interlocked according to the prior art.
FIG. 4 is a schematic sectional view of one coil element formed around a bigger filler cord in accordance with the present invention.
FIG. 5 is a plain view illustrating a left-handed series of coil-type coiling teeth and a right-handed series of coil-type coiling teeth of a double layer coiling zipper interlocked according to the present invention.
FIG. 6 is a sectional view of a double layer coiling zipper in accordance with a first embodiment of the present invention.
FIG. 7 is a sectional view of a zipper slider for double layer coiling zipper in accordance with the present invention.
FIG. 8 is a sectional elevation of a part of the zipper slider in accordance with the present invention, illustrating the structure of the front balance tongue.
FIG. 9 is a schematic sectional view illustrating zipper chain tapes and interlocking series of coils set in a needle stitching device according to the present invention.
FIG. 10 is an oblique elevation of the needle stitching device shown in FIG. 9.
FIG. 11 is a schematic elevational view of the double layer coiling zipper in accordance with the first embodiment of the present invention.
FIG. 12 is a schematic partial plain view of a double layer coiling zipper in accordance with a second embodiment of the present invention.
FIG. 13 is a schematic partial elevational view of the double layer coiling zipper in accordance with the second embodiment of the present invention.
FIG. 14 is a schematic drawing illustrating an UV curable adhesive injected through a dispensing nozzle into the concave gap between upper and lower waterproof zipper chain tapes according to the present invention.
FIG. 15 is a flow chart of a thermal shape-reformed compression process according to the present invention.
FIG. 16 is a schematic sectional view of a thermal shape-reformed compression system according to the present invention.
FIC 17 is an elevational view of the thermal shape-reformed compression system according to the present invention.
FIG. 18 is an enlarged view of a part of the thermal shape-reformed compression system according to the present invention.
FIG. 19 is a plain view of the thermal compression die shown in FIG. 18.
FIG. 20 is a schematic drawing a finished product after thermal shape-reformed compression process according to the present invention.
FIG. 21 is schematic drawing illustrating a hot air compression type thermal shape-reformed compression system according to the present invention.
FIG. 22 is an enlarged view of one thermal compression wheel shown in FIG. 21.
FIG. 23 is a front view of one coil element of a double layer coiling zipper in accordance with a third embodiment of the present invention.
FIG 24 is a top view of one left-handed series of coils and one mating right-handed series of coils of the double layer coiling zipper in accordance with the third embodiment of the present invention.
FIG 25 corresponds to FIG. 24. illustrating the left-handed series of coils and the right-handed series of coils interlocked.
FIG. 26 is a sectional view of the left half of the double layer coiling zipper in accordance with the third embodiment of the present invention.
FIG. 27 is a sectional view of the double layer coiling zipper in accordance with the third embodiment of the present invention, illustrating the left-handed series of coils and the right-handed series of coils interlocked.
FIG. 28 is a sectional view of a double layer coiling zipper in accordance with a fourth embodiment of the present invention.
FIG. 29 is a schematic top view of the zipper slider for double layer coiling zipper in accordance with the fourth embodiment of the present invention.
FIG 30 is a schematic bottom view of the zipper slider shown in FIG. 29.
FIG. 31 is a schematic side view illustrating an operation status of the zipper slider of the double layer coiling zipper in accordance with the fourth embodiment of the present invention.
FIG. 32 is a schematic sectional view of a double layer coiling zipper in accordance with a fifth embodiment of the present invention (before positioning of the crown of the zipper slider).
FIG 33 is an elevational view of the zipper slider of the double layer coiling zipper in accordance with the fifth embodiment of the present invention.
FIG. 34 is a schematic top view of the zipper slider of the double layer coiling zipper in accordance with the fifth embodiment of the present invention (before positioning of the crown of the zipper slider).
FIG 35 is a schematic side view of the zipper slider of the double layer coiling zipper in accordance with the fifth embodiment of the present invention.
FIG. 36 is a sectional elevation of a part of the zipper slider of zipper slide of the double layer coiling zipper in accordance with the fifth embodiment of the present invention.
FIG. 37 is a schematic side view of an alternate form of the zipper slider for the double layer coiling zipper in accordance with the fifth embodiment of the present invention, illustrating the sliding latch disengaged from the crown.
FIG. 38 corresponds to Figs 37, illustrating the sliding latch forced into engagement with the crown.

### DETAILED DESCRIPTION OF THE PREFERRED EMBODIMENTS

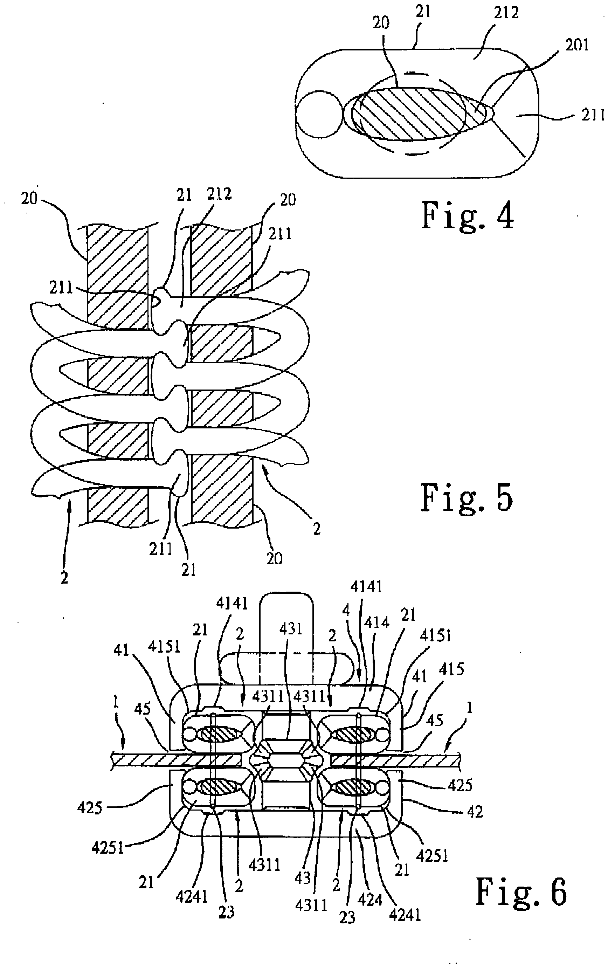

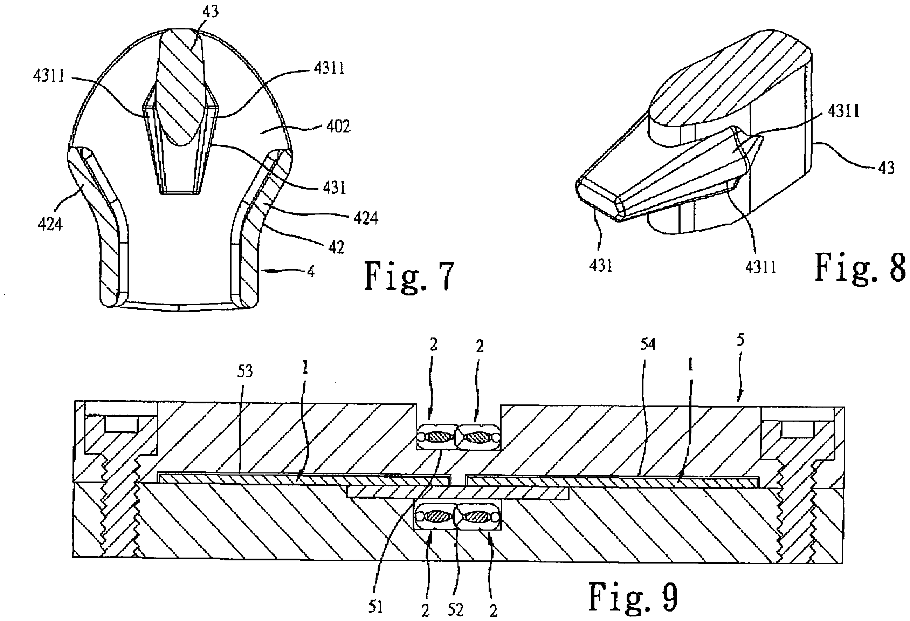

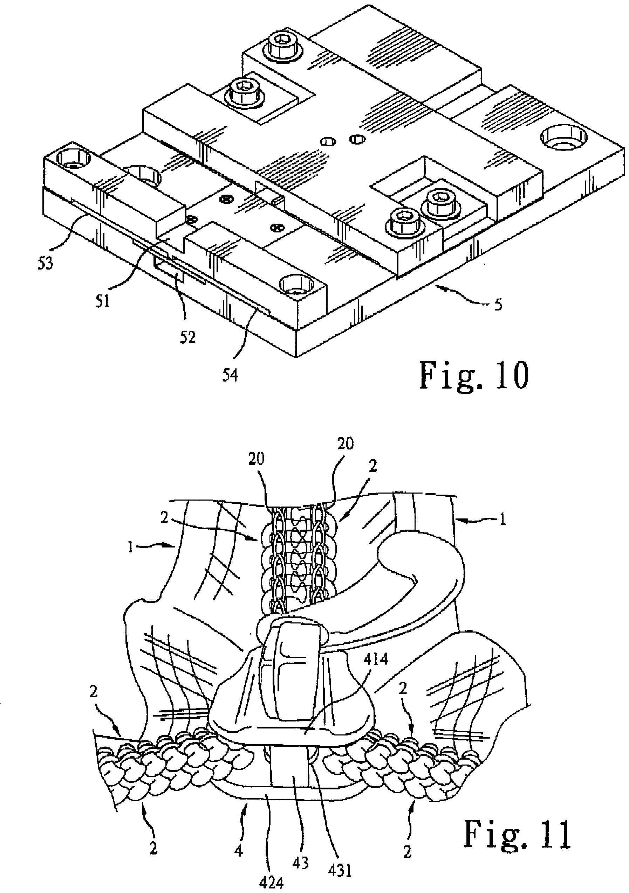

Referring to FIGS. 4-8 and FIG. 11, a double layer coiling zipper in accordance with a first embodiment of the present invention is shown. The double coil layer zipper is a sandwich mesh of double coil layer zipper, comprising two zipper chain tapes **1,** and an interlocking series of teeth **2** at each of opposing top and bottom sides of each of the zipper chain tapes **1.** Each interlocking series of teeth **2** comprises a left-handed or right-handed series of coils **21** (see FIG. 7 and FIG. 8). Each coil element of the left-handed or right-handed series of coils **21** comprises a coil head **211** and a coil body **212** connected to the front side of the coil head **211.** Further, the coil heads **211** and coil bodies **212** of the left-handed and right-handed series of coils **21** are respectively interlocked. During fabrication of the coils **21,** the coil material is spirally extended around a bigger filler cord **20** subject to the operation of a left/right screw rod, and compressed into substantially rectangular coil elements (see FIG. **4****).** At this time, the edge of one side **201** of the bigger filler cord **20** touches and stops the coil heads **211** of the respective coils **21** so that the left-handed and right-handed series of coils **21** can be interlocked positively. Thus, when the interlocking series of teeth **2** are interlocked and respectively set in upper and lower guide grooves **51;52** of needle stitching device **5** (see FIGS. **9** and 10), the left and right zipper chain tapes 1 are respectively received in left and right guide grooves **53;54** and then stitched together at a time. Technically, one false step will make a great difference. Coarse threads are used and twisted into the desired bigger filler cord (see FIG. 4). By means of the fixed pitch and space between the two screw rods of the zipper chain machine (not shown), the coil elements of the interlocking series of teeth thus made are compressed into substantially rectangular profile (see FIGS. **4** and 5), and at the same time, the circular cross section of the flexible bigger filler cord **20** is compressed into an oval shape so that the edge of one side **201** of the bigger filler cord **20** touches and stops the coil heads **211** of the respective coils **21,** facilitating interlocking between the left-handed and right-handed series of coils **21** and avoiding disengagement of the interlocked coils **21.** After installation of a zipper slider **4** in the double layer coiling zipper, the zipper slider **4** can be moved to joint or open the left-banded and right-handed series of coils **21** smoothly and accurately. Further, this design enables the interlocking series of teeth **2** and the left and right zipper chain tapes **1** to be accurately stitched together at a time, assuring a high level of zipper quality.

Further, the front ends of the coil elements of the lefk-handed and right-handed series of coils **21** are compacted into respective coil heads **211;** the rear ends of the coil elements of the left-handed and right-handed series of coils **21** are maintained flexible and smoothly arched. Further, the zipper slider **4** comprises a top slide body block **41,** a bottom slide body block **42,** a center block **43** connected between the top slide body block **41** and the bottom slide body block **42,** a zipper tape gap **45** defined in between the top slide body block **41** and the bottom slide body block **42** (see FIG. 4), and a crown (not shown) located on the top side of the top slide body block **4.** The top slide body block **41** and the bottom slide body block **42** respectively define therein a substantially C-shaped space so that two C-shaped guide grooves **4151** are bilaterally defined between the top wall **414** and opposing sidewalls **415** of the top slide body block **41;** two C-shaped guide grooves **4251** are bilaterally defined between the bottom wall **424** and opposing sidewalls **425** of the bottom slide body block **42.** The C-shaped guide grooves **4151;4251** fit the outer smoothly arched configuration of the coils **21** (see FIG. 6). After insertion of the upper and lower zipper chain tapes through the upper and lower C-shaped spaces in the zipper slider **4** between the top slide body block **41** and the bottom slide body block **42,** the C-shaped guide grooves **4151;4251** guide the upper and lower interlocking series of coils **21** forwards or backwards smoothly. Thus, even the double layer coiling zipper is installed in a corner area of a luggage, tent, or any of a variety of other articles, the interlocking series of coils **21** can be accurately and positively jointed or opened. Further, as shown in FIG. **6****,** escape grooves **4141;4241** are respectively located on the top wall **414** of the top slide body block **41** and the bottom wall of the bottom slide body block **42** for the passing of the respective lines of adhesive-wetted stitches **23** that secure the respective interlocking series of teeth **21** to the respective zipper chain tapes **1,** avoiding friction.

Further, the zipper slider **4** comprises a front balance tongue **431** forwardly extended from the center block **43** (see FIGS. 6-8) and matching the arched edge of the coil heads **211** of the series of coils **21.** The front balance tongue **431** comprises a plurality of guide grooves **4311** for guiding the coil heads **211** of the series of coils **21,** enabling the series of coils **21** to be jointed or opened smoothly and stably.

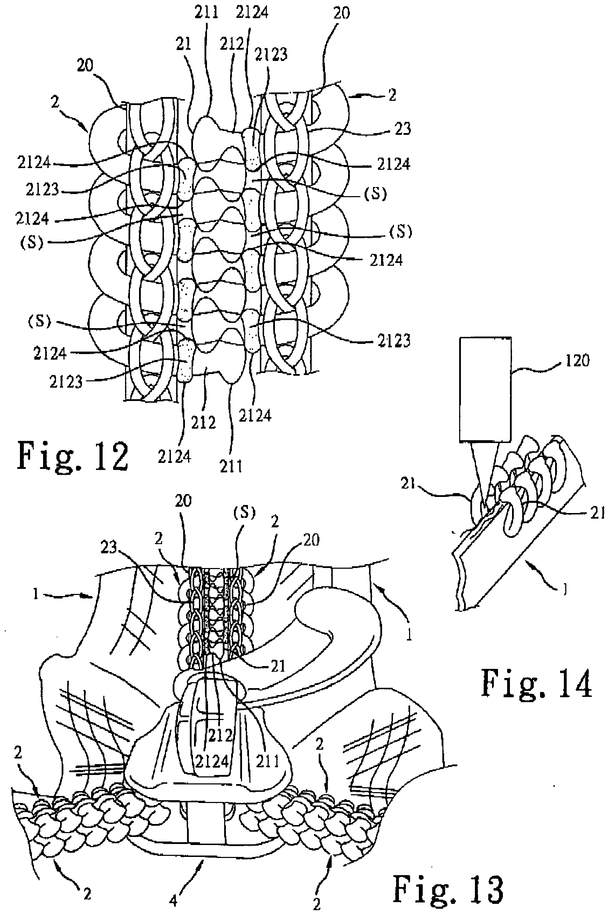

FIGS. 12 and 13 illustrate a double layer coiling zipper in accordance with a second embodiment of the present invention. According to this second embodiment, the series of coils of the double layer coiling zipper are further processed through a thermal shape-refonned compression process to enhance strength and wear resistance. As illustrated in FIGS. **12** and **13****,** the double layer coiling zipper comprises left and right zipper chain tapes 1, left-handed and right-handed series of coils **21** respectively stitched to opposing top and bottom sides of each of the left and right zipper chain tapes **1** with lines of adhesive-wetted stitches **23,** and a zipper slider (not shown) movable to joint/open the left-handed and right-handed series of coils **21,** wherein each coil element of the left-handed and right-handed series of coils **21** comprises a coil head **211** and a coil body **212** connected to the front side of the coil head **211.**

The coil body **212** of each coil element of the left-handed and right-handed series of coils **21** is deformed during the thermal shape-reformed compression process, forming a collar **2123** having expanded flanges **2124** at two opposite lateral sides. When the left-handed and right-handed series of coils **21** are interlocked, the coil head **211** of one respective left-handed series of coil **21** is stopped against one expanded flange **2124** of the collar **2123** of each of two coil elements of the mating right-handed series of coils **21,** enhancing interlocking tightness. When an external sharp object (for example, ball point pen) is inserted into the interlocking series of teeth **2,** the sharp point of the external sharp object may be forced into a tiny space S (below 0.3mm) between the line of adhesive-wettrd stitches **23** and the adjacent expanded flanges **2124.** However, when the external sharp object is forced forwards continuously, it is prohibited from further movement to force the locked series of coils **21** apart due to that the coil heads **211** of the left-handed or right-handed series of coils **21** are stopped by the expanded flanges **2124** of the collars **2123** of the mating right-handed or left-handed series of coils **21.** Thus, this second embodiment enhances the strength and interlocking tightness. Further, as shown in FIG. 14, a glue dispenser may be used to dispense an UV curable adhesive through a dispensing nozzle **120** into the concave gap in between each zipper chain tapes **1** and then cured by ultraviolet rays. Thus, the applied UV curable adhesive seals the concave spaces in the zipper chain tapes **1** and between both teeth then thermal dried, enhancing waterproof, airtight and unbroken functions.

Further, the aforesaid thermal shape-reformed compression process includes three steps, i.e., step A, step B and step C.

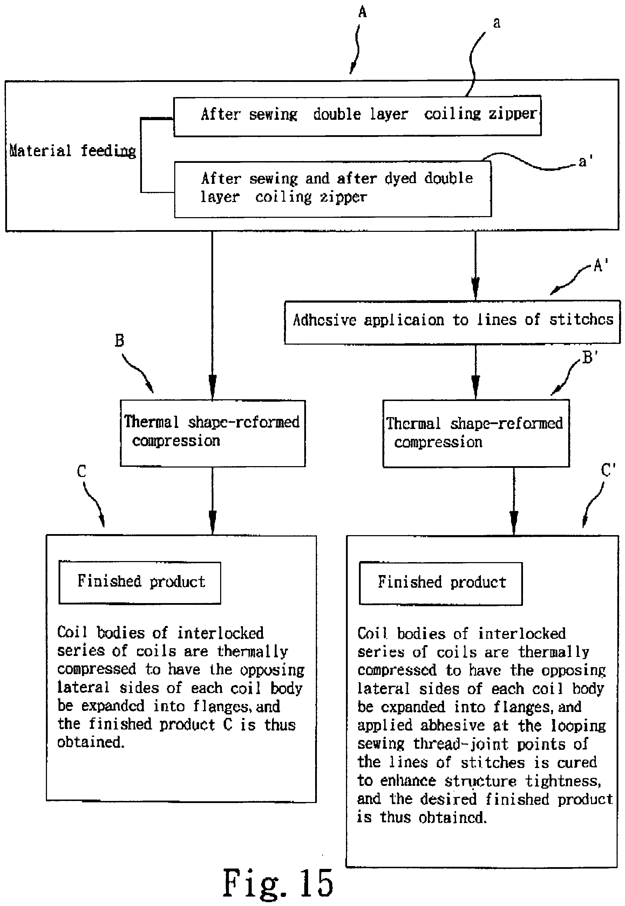

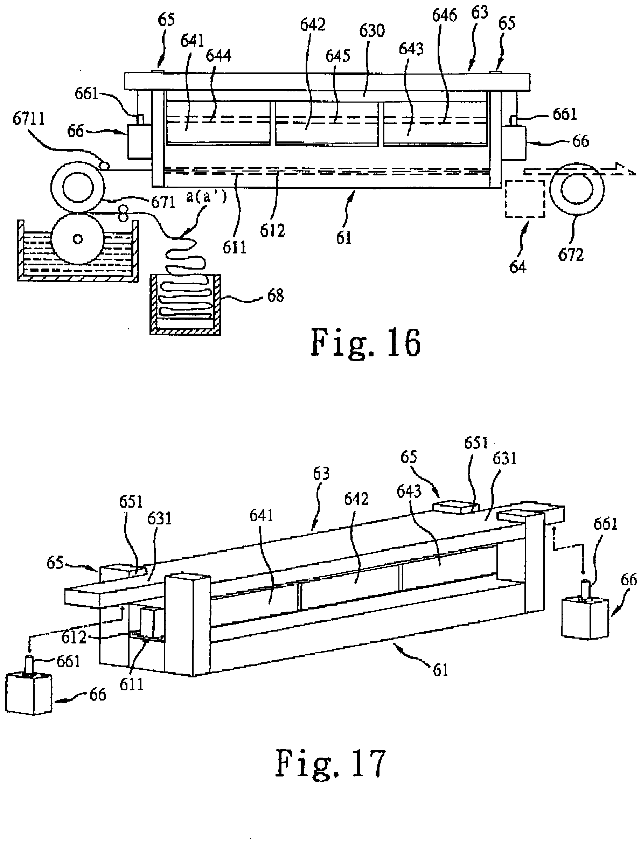

Step A: Put a after sewing double layer coiling zipper a or after sewing and after dyed double layer coiling zipper a' in a feeding container **68** (see FIGS. 15 and 16), enabling the double layer coiling zipper a or a' to be fed into a lower table **61** (see FIGS. 16-18). At this time, the interlocking series of teeth **2** of the double layer coiling zipper a or a' are guided into guide grooves **611** in the lower table **61** below a cover plate **612** so that the double layer coiling zipper a or a' can be smoothly forwardly delivered by a motor drive **64** step by step subject to a predetermined time interval;

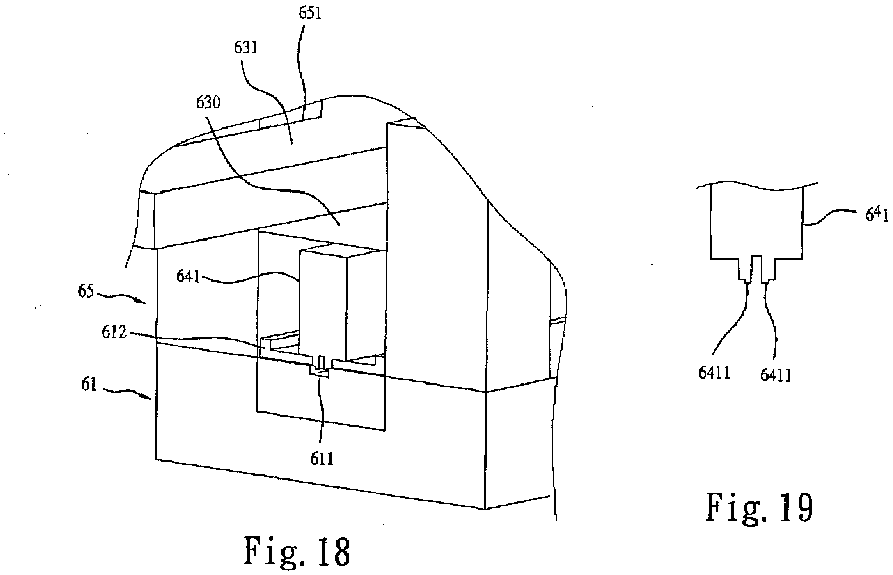

Step B:Operate power cylinders **66** to extend/retract reciprocating rods **661** thereof in moving sliding blocks **631** of an upper table **63** along vertical sliding grooves **651** of upright supports **65** relative to the lower table **61** and control a temperature-controllcd heater **644** to heat a thermal compression die **641** at the bottom side of the upper table **63** to about 200°C∼300°C or preferably 250°C∼280°C (subject to the material of the interlocking teeth of the double layer coiling zipper), forcing the typeface **6411** of the thermal compression die **641** (see FIG. 19) against the coil bodies **212** of the coil elements of the series of coils **21** of the interlocking series of teeth **2** of the double layer coiling zipper a or a', and therefore the coil bodies **212** are deformed to provide a respective collar **2123** having expanded flanges **2124** (see FIGS. 12, 13 and 30). A finished product C is thus obtained.

Further, a front guide roller set **671** and a rear guide roller set **672** are respectively arranged at front and rear sides relative to the upper table **63** for guiding the double layer coiling zipper a or a' into the lower table **61** or the finished product C out of the lower table **61.**

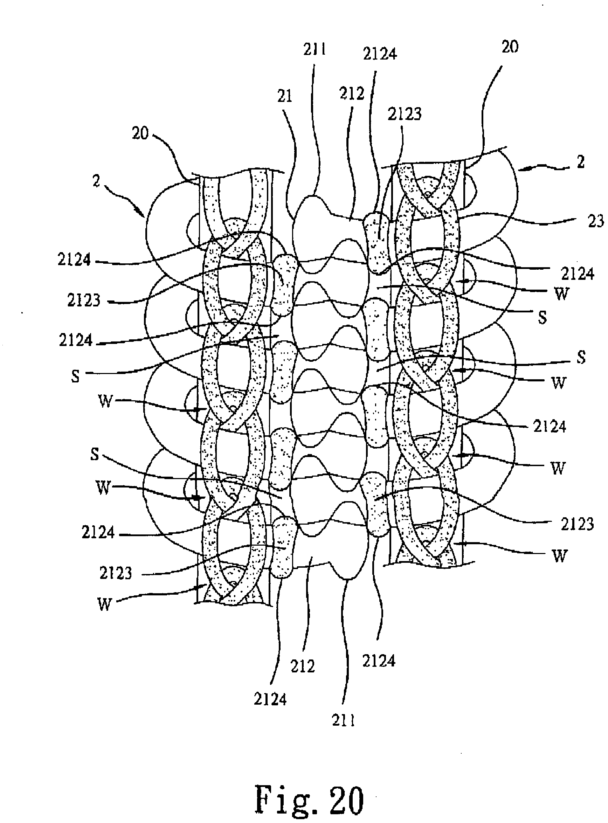

Further, an adhesive (for example, epoxy resin) may be applied to the lines of adhesive-wetted stitches **23** of the double layer coiling zipper a or a' prior to the thermal shape-reformed compression process. During the thermal shape-reformed compression process, the applied adhesive is cured to affix looping sewing thread-joint points W of the line of adhesive-wetted stitches **23** in place (see FIG. 20), enhancing zipper coil strength and wearing resistance.

Further, as stated above, the aforesaid front guide roller set **671** is arranged at the front relative to the upper table **63** for guiding the double layer coiling zipper a or a' into the lower table **61;** the rear guide roller set **672** is arranged at the rear side relative to the upper table **63** for guiding the finished product C out of the lower table **61.** Further, the front guide roller set **671** comprises a tension bar **6711** for pressing on the double layer coiling zipper a or a' that is being guided into the lower table **G1.**

Further, the aforesaid thermal shape-reformed compression system further comprises a heat insulating plate **630** set between the thermal compression die **641** and the upper table **63.**

Further, as shown in FIG 16, the cover plate **612** is kept in proximity to the top wall of the lower table **61,** enabling the double layer coiling zipper a or a' to be smoothly delivered along the lower table **61** by the motor drive **64.**

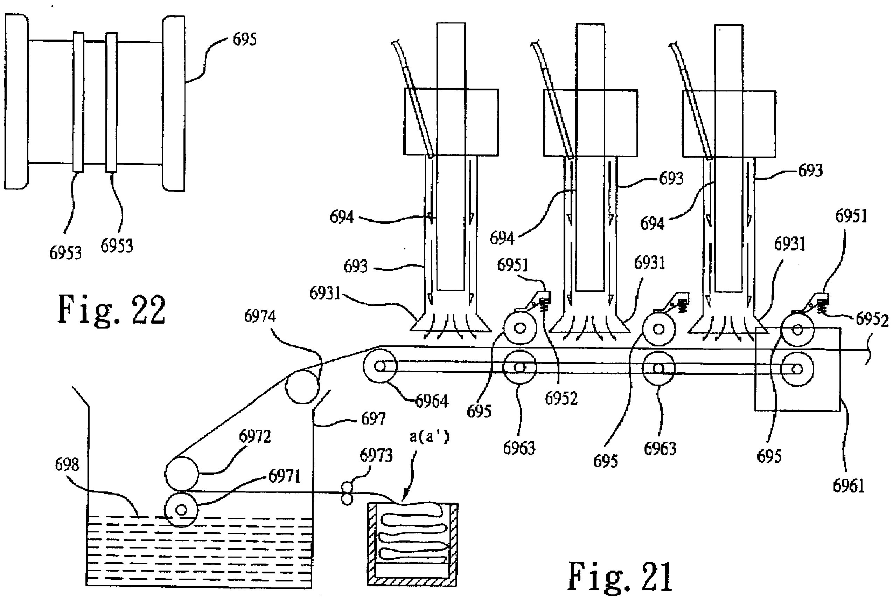

Further, as shown in FIG 21, the aforesaid thermal shape-reformed compression process can be achieved by means of the application of hot air. This hot air compression type thermal shape-reformed compression process includes the steps of material feeding **A** and thermal compression **B.**

Material feeding A:
Deliver a after sewing double layer coiling zipper a or after sewing and after dyed double layer coiling zipper a' over the bottom side of each of a number of hot air pipes **693;**

Thermal compression **B:**
Drive hot air out of the hot air pipes **693** through flat nozzles **6931** thereof toward the coil bodies **212** of the coil elements of the series of coils **21** of the interlocking series of teeth **2** of the double layer coiling zippera or a' to soften the upper part of the coil bodies **212** without softening the lower part of the coil bodies **212,** enabling the softened upper part of the coil bodies **212** to be rammed by typefaces **6953** of thermal compression wheels **695** (see FIG. 22), forming a respective collar **2123** having expanded flanges **2124** (see FiGS. 20), and the desired finished product C is thus obtained.

Alternatively, the hot air compression type thermal shape-reformed compression process can be configured to include the steps of: material feeding **A',** adhesive dispensing **A',** and thermal compression **B'.**

Material feeding A':
Deliver a after sewing double layer coiling zipper a or after sewing and after dyed double layer coiling zipper a' over the bottom side of each of a number of hot air pipes **693;**

Adhesive dispensing A':
Apply an adhesive (for example, epoxy resin) to the lines of adhesive-wetted stitches **23** of the double layer coiling zipper a or a';

Thermal compression **B**':
Drive hot air out of the hot air pipes **693** through flat nozzles **6931** thereof toward the coil bodies **212** of the coil elements of the series of coils **21** of the interlocking series of teeth **2** of the double layer coiling zipper a or a' to soften the upper part of the coil bodies **212** without softening the lower part of the coil bodies **212.** enabling the softened upper part of the coil bodies **212** to be rammed by typefaces **6953** of thermal compression wheels **695** (see FIG. 22) to provide a respective collar **2123** having expanded flanges **2124** (see FIGS. 20) and the applied resin to be cured to affix the looping sewing thread-joint points W of the line of adhesive-wetted stitches **23** in place (see FIG 20), and the desired finished product C' is thus obtained.

Further, as shown in FIG. **21****,** during the step of adhesive dispensing **A',** a motor drive **6961** is controlled to rotate transmission wheels **6963** and zipper-transfer wheels **6964** that are arranged below the hot air pipes **693.** Further, the thermal compression wheels **695** are respectively disposed above the transmission wheels **6963;** the double layer coiling zipper a or a' is been delivered through the gap between the thermal compression wheels **695** and the transmission wheels **6963.** Further, a respective pressure plate **6951** is supported on a respective spring member **6952** and forced by the spring member **6952** to press on one respective thermal compression wheel **695.**

Further, an adhesive container **697** is provided to hold an adhesive **698.** The double layer coiling zipper a or a' is delivered through the gap in between a zipper-transfer roller **6972** and an adhesive dispensing roller **6971** in the adhesive container **697** before reaching the space right below the hot air pipes **693.** Further, guide rollers **6973** and tension rod **6974** are respectively for guiding the double layer coiling zipper a or a' into or out of the adhesive container **697**.

Further, a temperature-controlled heater **694** is mounted in each hot air pipes **693** for heating the applied gas within 300°C∼400°C.

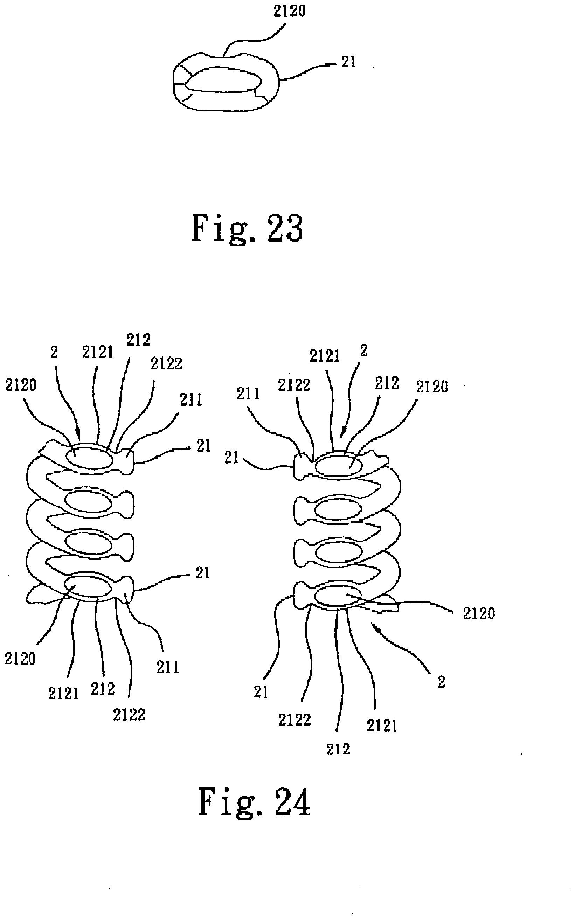

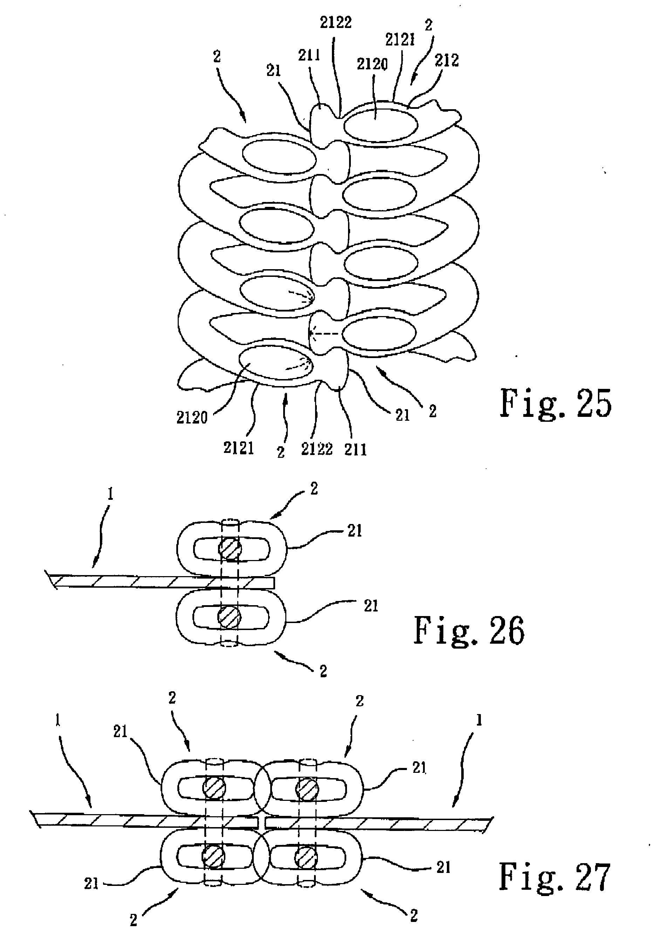

FIGs. 23-27 illustrate a double layer coiling zipper in accordance with a third embodiment of the present invention. According to this embodiment, the double layer coiling zipper uses tadpole-shaped interlocking teeth. As illustrated, the double layer coiling zipper comprises two zipper chain tapes **1,** and an interlocking series of teeth **2** at each of opposing top and bottom sides of each of the zipper chain tapes **1.** Each interlocking series of teeth 2 comprises a left-handed or right-handed series of coils **21** (see FIG. 24 and FIG. 25). Each coil element of the left-handed or right-handed series of coils **21** comprises a coil head **211** and a coil body **212** connected to the front side of the coil head **211** (see FIGs. 23 and 24). Further, the coil heads **211** and coil bodies **212** of the left-handed and right-handed series of coils **21** are respectively interlocked. The coil body **212** of each coil element comprises a recessed face **2120,** two side flanges **2121** at two opposite lateral sides of the recessed face **2120,** and a neck **2122** disposed at the front side of the recessed face **2120** and connected to the coil head **211.** Thus, each coil **21** is tadpole-shaped. When the left-handed series of coils **21** and the mating right-handed series of coils **21** are interlocked, the coil head **211** of each coil element of the left-handed (or right-handed) series of coil **21** is retained between the necks **2122** of the coil bodies **212** of two coil elements of the (right-handed (or left-handed) series of coils **21,** preventing disengagement between interlocking teeth **2** upon transverse stretching (see the imaginary arrowhead sign in FIG. 25). This double layer coiling zipper with tadpole-shaped interlocking teeth is practical for use in a corner area in a suitcase or tent. When the coils **21** of the upper pair of tadpole-shaped interlocking teeth **2** is forced downwards by a sharp object, the coils **21** of the lower pair of tadpole-shaped interlocking teeth **2** are tightly engaged to give support, preventing disengagement between the coils **21** of the upper pair of tadpole-shaped interlocking teeth **2** (see FIG. 27).

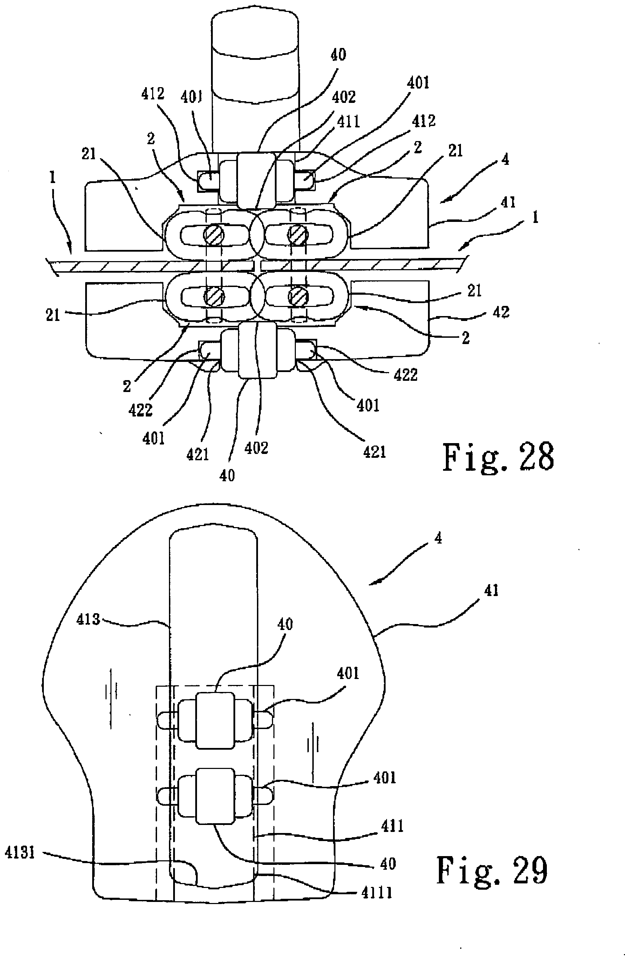

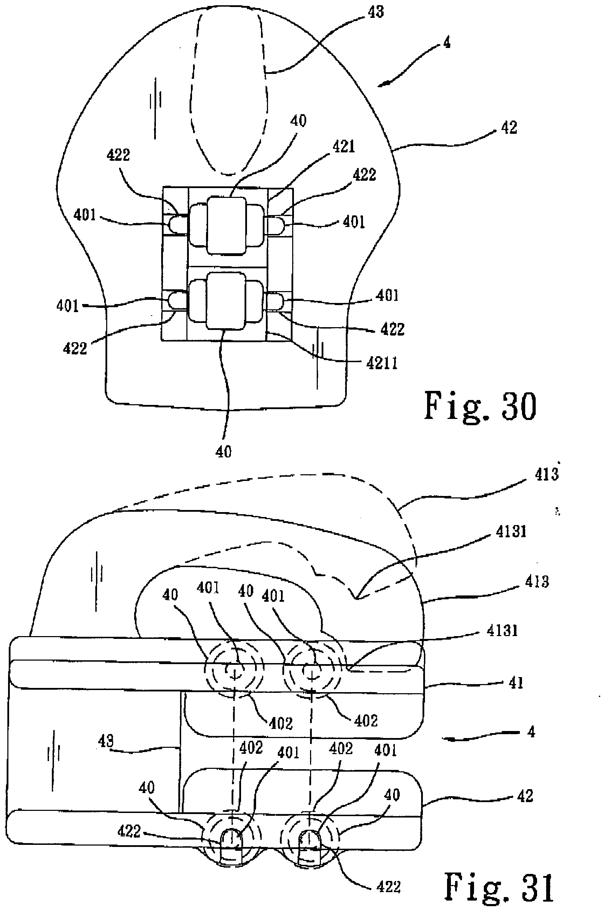

Referring to FIG. 28, a double layer coiling zipper in accordance with a fourth embodiment of the present invention is shown. According to this embodiment, the double layer coiling zipper uses tadpole-shaped interlocking teeth. The zipper slider **4** of the double layer coiling zipper(see FIGS. 30 and 31) comprises a top slide body block **41,** a bottom slide body block **42,** a center block **43** connected between the top slide body block **41** and the bottom slide body block **42,** and a crown **413** located on the top side of the top slide body block **41** for holding a pull tab (not shown). The top slide body block **41** comprises a crown **413,** a longitudinal slot **411** cut through the top and bottom sides thereof on the middle, and two coupling grooves **412** located at two opposite lateral sides of the longitudinal slot **411.** The bottom slide body block **42** comprises a longitudinal slot **421** cut through the top and bottom sides thereof on the middle, and two coupling grooves **422** located at two opposite lateral sides of the longitudinal slot **421.** The zipper slider **4** further comprises a plurality of rollers **40** respectively rotatably mounted in the longitudinal slots **411;421.** between the top slide body block **41** and the bottom slide body block **42.** Each roller **40** has two opposing pivot pins **401** coupled to the coupling grooves **412;422.**

When closing or opening the zip fastener, the rollers **40** are kept in contact with the interlocking series of teeth **2** of the double layer coiling zipper, keeping the protruding upper faces of the left-handed and right-handed series of coils **21** on the same elevation, assuring positive engagement between the left-handed and right-handed series of coils **21.** During sliding movement of the zipper slider to close or open the left-handed and right-handed series of coils **21** of the interlocking series of teen **2** of the double layer coiling zipper, the rollers **40** are rotated relative to and kept in contact with the topmost edges of the protruding upper faces of the left-handed and right-handed series of coils **21** of the interlocking series of teen **2,** minimizing friction resistance and enhancing sliding smoothness.

Further, the front lower edge **4131** of the crown **413** of the top slide body block **41** of the zipper slider **4** is stopped at the front end **4111** of the longitudinal slot **411** (see FIG 29) to prevent escape of the rollers **40** out of the zipper slider **4.** The front end of the longitudinal slot **421** of the bottom slide body block **42** is a close end **4211** (see FIG. 30) or sealed with a stop block preventing escape of the rollers **40** out of the zipper slider **4.** Further, the rollers **40** are symmetrically and respectively concentrically arranged in between the top slide body block **41** and the bottom, slide body block **42.**

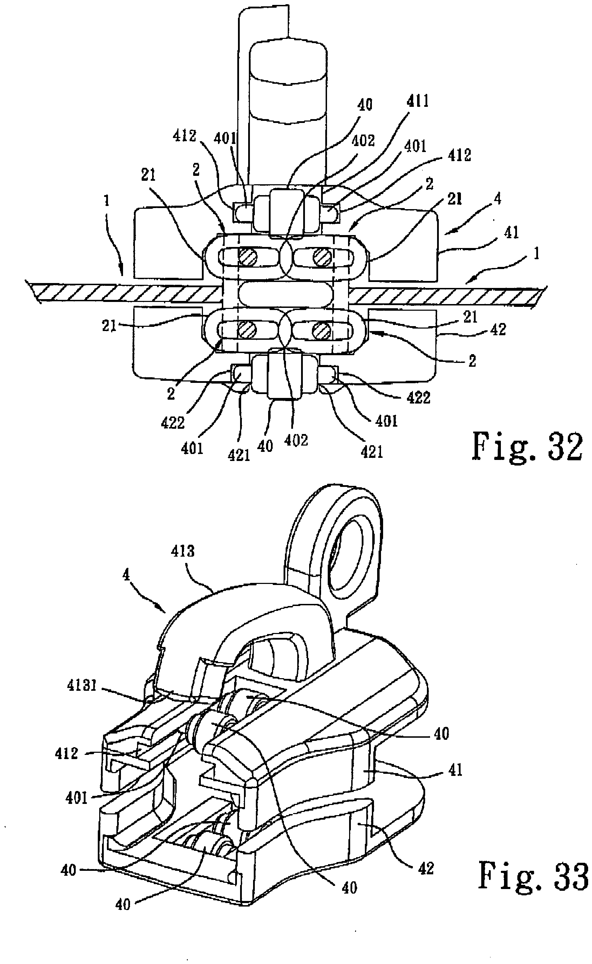

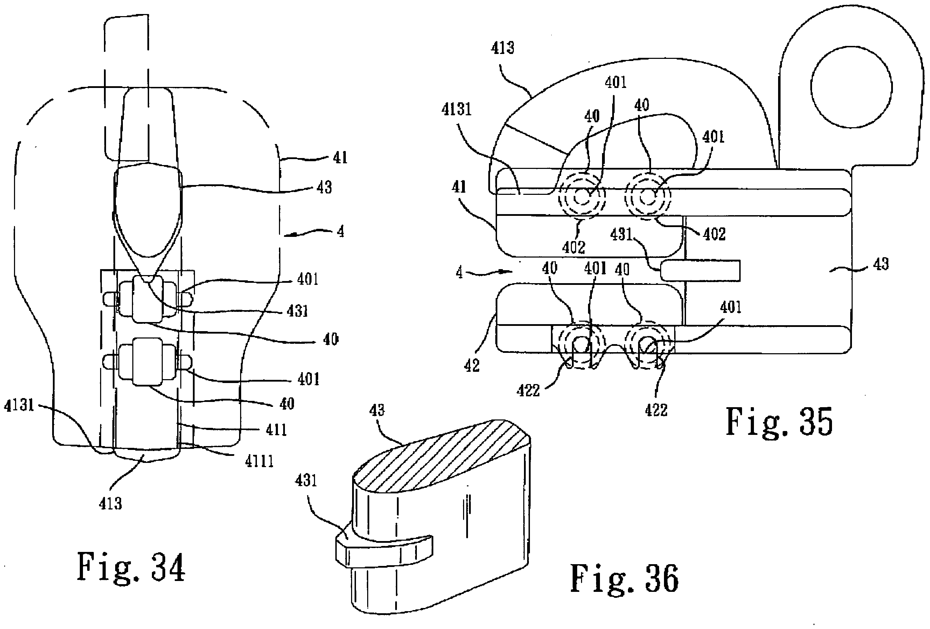

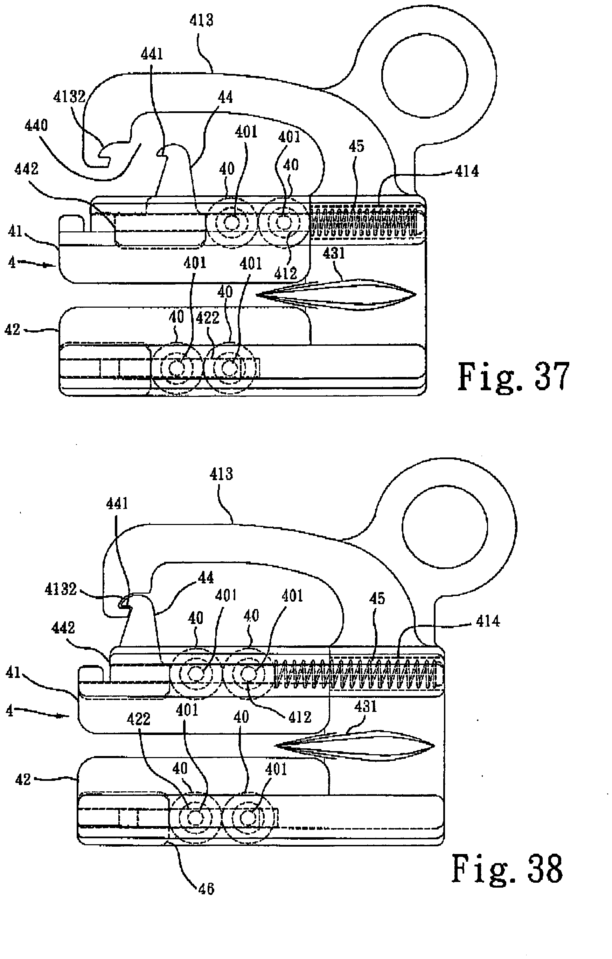

FIGS. 32-38 illustrate a double layer coiling zipper in accordance with a filth embodiment of the present invention. This fifth embodiment is substantially similar to the aforesaid third embodiment with the exception that the zipper slider **4** further comprises a front balance tongue **431** forwardly extended from the center block **43** (see FIGS. 34-36). Similar to the aforesaid fourth embodiment, the zipper slider **4** has rollers **40** rotatably set in the longitudinal slots **411;421** between the top slide body block **41** and the bottom slide body block **42** with the pivot pins **401** thereof respectively coupled to the coupling grooves **412;422.** During sliding movement of the zipper slider to close or open the left-handed and right-handed series of coils **21** of the interlocking series of teen **2** of the double layer coiling zipper, the peripheral surfaces **402** of the rollers **40** are kept in contact with the topmost edges of the protruding upper faces of the left-handed and right-handed series of coils **21** of the interlocking series of teen **2,** minimizing friction resistance and enhancing sliding smoothness. Further, the front lower edge **4131** of the crown **413** of the top slide body block **41** of the zipper slider **4** is stopped at the front end **4111** of the longitudinal slot **411** (see FIG. 35) to prevent escape of the rollers **40** out of` the zipper slider **4.** The front end of the longitudinal slot **421** of the bottom slide body block **42** is a close end or sealed with a stop block, preventing escape of the rollers **40** out of the zipper slider **4.** Further, the pull tab of the zipper slider **4** can be of a detachable design for allowing replacement. Thus, different designs of pull tabs can be selectively attached to the zipper slider **4** to satisfy different clients. Further, as shown in FIG. 37, a sliding latch **44** is mounted in the top slide body block **41** and stopped **at** the front side of the rollers **40** in the longitudinal slot of the top slide body block **41** against a compression spring **45** in a spring mount **414** in the top sliding body block **41.** The sliding latch **44** has a hooked tip **441** engageable into a locating groove **4132** at the free end of the crown **413** (see FIG. 38) to prevent falling of the pull tab (not shown) out of the crown **413.** When forcing the sliding latch **44** backwards to disengage the hooked tip **441** from the locating groove **4132,** a pull tab (not shown) can then be hooked on or removed from the crown **413.** When release the hand from the sliding latch **44,** the sliding latch **44** is moved forwards automatically by the compression spring **45** to force the hooked tip **441** into engagement with the locating groove **4132** of the crown **413,** and therefore the pull tab (not shown) is prohibited from falling out of the crown **413.** Further, the sliding latch **44** comprises two opposing sliding blocks **442** respectively coupled to the coupling grooves **412** of the top slide body block **41.** Further, a stop block **46** is arranged in the bottom slide body block **42** at the front end of the longitudinal slot of the bottom slide body block **42** to keep the rollers **40** in the zipper slider.

In conclusion, the double layer coiling zipper in accordance with the present invention has the following features and advantages:
1. After the thermal shape-reformed compression process, the bigger filler cord **20** is compacted, and one extended lateral side edge of the bigger filler cord **20** is stopped against the coil heads **211** of the corresponding series of coils **21,** enabling the left-handed and right-handed series of coils **21** to be accurately interlocked, avoiding loosening.
2. The C-shaped guide grooves **4251;4251** of the zipper slider **4** are configured to guide the upper and lower interlocking series of coils **21** forwards or backwards smoothly. Thus, even the double layer coiling zipper is installed in a corner area of a luggage, tent, or any of a variety of other articles, the interlocking series of coils **21** can be accurately and positively jointed or opened.
3. The front balance tongue **431** of the center block **43** of the zipper slider 4 has guide grooves **4311** adapted for guiding the coil heads **211** of the series of coils **21,** enabling the series of coils **21** to be jointed or opened smoothly and stably.
4. The coil body **212** of each coil element of the left-handed and right-handed series of coils **21** is deformed during the thermal shape-reformed compression process, forming a collar **2123** having expanded flanges **2124** at two opposite lateral sides. When the left-handed and right-handed series of coils **21** are interlocked, the coil head **211** of one respective left-handed series of coil **21** is stopped against one expanded flange **2124** of the collar **2123** of each of two coil elements of the mating right-handed series of coils **21,** enhancing interlocking tightness.
5. An adhesive (for example, epoxy resin) may be applied to the lines of stitches of the double layer coiling zipper prior to the thermal shape-reformed compression process. During the thermal shape-reformed compression process, the applied adhesive is cured to affix looping sewing thread-joint points of the line of adhesive-wetted stitches in place, enhancing zipper coil strength and wearing resistance and preventing breaking of the lines of adhesive-wetted stitches during transportation of the finished product C.
6. Rollers **40** are provided in the zipper slider **4** between the top slide body block **41** and the bottom slide body block **42** with the peripheral surfaces **402** thereof kept in contact with the series of coils **21,** assuring accurate and positive engagement between the series of coils **21.**
7. The zipper slider 4 can he configured for allowing replacement of the pull tab so that different pull tabs can be selectively attached to the zipper slider **4** to satisfy different clients and improve delivery service.
8. An UV curable adhesive may be dispensed through a dispensing nozzic **120** into the concave gap in each of the zipper chain tapes **1** and both coil teeth and then cured by ultraviolet rays to form a coating on the zipper chain tapes 1, thereby providing waterproof, airtight and unbroken functions.

## Claims

1. A double layer coiling zipper, comprising: two zipper chain tapes and an interlocking series of teeth at each of opposing top and bottom sides of each of said two zipper chain tapes, each said interlocking series of teeth comprising a bigger filler cord and a left-handed or right-handed series of coils extending around said bigger filler cord, each said coil comprising a coil head and a coil body connected to a front side of said coil head, wherein said bigger niter cord is compacted during formation of said interlocking series of teeth, having an extended side edge thereof stopped against the coil heads of the respective series of coils.

2. The double layer coiling zipper as claimed in claim 1, wherein each said zipper tape is coated with a layer of glue for waterproof and cured to seal concave spaces in each said zipper tape and between both teeth then thermal dried and to enhance waterproof, airtight and unbroken functions.

3. A sandwich mesh of double layer coiling zipper, comprising: two zipper chain tapes, an interlocking series of teeth at each of opposing top and bottom sides of each of said two zipper chain tapes, and a zipper slider operable to move said interlocking series of teeth between a jointing position and an opening position, each said interlocking series of teeth comprising a bigger filler cord and a left-handed or right-handed series of coils extending around said bigger filler cord, each said coil comprising a coil head and a coil body connected to a front side of said coil head, said zipper slider comprising opposing top slide body block and bottom slide body block and a tiller block connected between said top slide body block and said bottom slide body block, wherein said bigger filler cord is compacted during formation of said interlocking series of teeth, having an extended side edge thereof stopped against the coil heads of the respective series of coils, said zipper slider comprises a front balance tongue forwardly extended from said center block between said top slide body block and said bottom slide body block, said front balance tongue comprising a plurality of guide grooves for guiding the coil heads of said series of coils into the jointed/opened position.

4. The sandwich mesh of double layer coiling zipper as claimed in claim 3, wherein said top slide body block of said zipper slider comprises a top wall, two opposing sidewalls, and two C-shaped guide grooves bilaterally defined between the top wall and opposing sidewalls of said top slide body block and fitting the outer configuration of said coils; said bottom slide body block of said zipper slider comprises a bottom wall, two opposing sidewalls, and two C-shaped guide grooves bilaterally defined between the bottom wall and opposing sidewalls of said bottom slide body block and fitting the outer configuration of said coils.

5. A double layer coiling zipper, comprising: two zipper chain tapes and an interlocking series of teeth at each of opposing top and bottom sides of each of said two zipper chain tapes, each said interlocking series of teeth comprising a bigger filler cord and a left-handed or right-handed series of coils extending around said bigger filler cord, each said coil comprising a coil head and a coil body connected to a front side of said coil head, wherein said series of coils of said interlocking series of teeth are processed through a thermal shape-reformed compression process such that the coil body of each said coil of said interlocking series of teeth comprises a collar disposed having expanded flanges at two opposite lateral sides thereof.

6. A double layer coiling zipper, comprising: two zipper chain tapes and an interlocking series of teeth at each of opposing top and bottom sides of each of said two zipper chain tapes, each said interlocking series of teeth comprising a bigger filler cord and a left-handed or right-handed series of coils extending around said bigger filler cord, each said coil comprising a coil head and a coil body connected to a front side of said coil head, wherein said series of coils of said interlocking series of teeth are processed through a thermal shape-reformed compression process such that the coil body of each said coil of said interlocking series of teeth comprises a collar having expanded flanges at two opposite lateral sides thereof; said zipper slider comprises a front balance tongue forwardly extended from said filler block between said top slide body block and said bottom slide body block, said front balance tongue comprising a plurality of guide grooves for guiding the coil heads of said series of coils into the jointed/opened position.

7. A double layer coiling zipper, comprising: two zipper tapes with tadpole-shaped interlocking teeth at each of opposing top and bottom sides of each of said two zipper chain tapes, each said tadpole-shaped interlocking series of teeth comprising a bigger filler cord and a left-banded or right-handed series of coils extending around said bigger filler cord, each said coil comprising a coil head and a coil body connected to a front side of said coil head, wherein said series of coils of said interlocking series of teeth are processed through a thermal shape-reformed compression process such that the coil body of each said coil of said tadpole-shaped interlocking series of teeth comprises a recessed face, two side flanges at two opposite lateral sides of said recessed face, and a neck disposed at a front side of said recessed face and connected to the respective coil head.

8. A double layer coiling zipper, comprising: two zipper tapes with tadpole-shaped interlocking teeth at each of opposing top and bottom sides of each of said two zipper chain tapes, each said tadpole-shaped interlocking series of teeth comprising a bigger filler cord and a left-handed or right-handed series of coils extending around said bigger filler cord, each said coil comprising a coil head and a coil body connected to a front side of said coil head, wherein said series of coils of said tadpole-shaped interlocking series of teeth are processed through a thermal shape-reformed compression process such that the coil bods of each said coil of said interlocking series of teeth comprises a recessed face, two side flanges at two opposite lateral sides of said recessed face, and a neck disposed at a front side of said recessed face and connected to the respective coil head; said zipper slider comprises a front balance tongue forwardly extended from said center block between said top slide body block and said bottom slide body block, said front balance tongue comprising a plurality of guide grooves for guiding the coil heads of said series of coils into the jointed/opened position.

9. The double layer coiling zipper as claimed in claim 8, wherein said zipper slider comprises a longitudinal slot cut through each of said top slide body block and said bottom slide body block, two coupling grooves bilaterally disposed in each of said top slide body block and said bottom slide body block, a plurality of rollers respectively movably set in the longitudinal slots in said top slide body block and said bottom slide body block and respectively pivotally coupled to the coupling grooves in said top slide body block and said bottom slide body block, and a crown located on a top side of said top slide body block for holding a pull tab, said crown having a front lower end thereof stopped at a front end of the longitudinal slot in said top slide body block.

10. The double layer coiling zipper as claimed in claim 8, wherein said crown comprises a fixed end connected to said top slide body block, a free end spaced from said top slide body block at a distance and a locating groove located on said free end; said zipper slider further comprises a compression spring mounted in said top slide body block and stopped against the rollers in the longitudinal slot of said top slide body block, and a sliding latch slidably coupled to the coupling grooves in said top slide body block and stopped at one side of the rollers in the longitudinal slot of said top slide body block against said compression spring for closing said crown, said sliding latch comprising a hooked tip engageable into a locating groove on the free end of said crown.

11. A thermal shape-refonmcd compression process for reforming the flanges shape of left-handed and right-handed series of coils of a double layer coiling zipper, comprising the steps of:
(A) put a after sewing double layer coiling zipper or a after sewing and after dyed double layer coiling zipper in a feeding container for enabling the double layer coiling zipper to be guided into guide grooves in a lower table below a cover plat; and
(B) operate a plurality of power cylinders to extend/retract reciprocating rods thereof in moving sliding blocks of an upper table along vertical sliding grooves of upright supports relative to said lower table and then control a temperature-controlled heater to heat a thermal compression die at a bottom side of said upper table to about 200°C∼300°C, forcing a typeface of said thermal compression die against the coil bodies of the coil elements of the left-handed and right-handed series of coils of the double layer coiling zipper to deform said coil bodies and to have said coils provide a respective collar having expanded flanges.

12. The thermal shape-reformed compression process as claimed in claim 11, further comprising a sub step to apply an adhesive to each line of stitches seam of the double layer coiling zipper and making the said stitches adhesive-wet prior after step (A) and before step (B).

13. A thermal shape-reformed compression process for reforming the flanges shape of left-handed and right-handed series of coils of a double layer coiling zipper, comprising the steps of
(A) deliver a after sewing double layer coiling zipper or a after sewing and after dyed double layer coiling zipper over a bottom side of each of a number of hot air pipes; and
(B) drive hot air out of said hot air pipes through a respective flat nozzle toward coil bodies of coil elements of left-handed and right-handed series of the double layer coiling zipper to soften the upper part of the coil bodies, enabling the softened upper part of the coil bodies to be rammed by typefaces of thermal compression wheels to form a respective collar having expanded flanges, and during material process an adhesive applied to the lines of stitches of the double layer coiling zipper and make the stitches adhcsive-wet, during the thermal shape-reformed compression process, the applied adhesive is cured to affix looping sewing thread-joint points of the line of adhesive-wetted stitches in place, enhancing zipper coil strength and wearing resistance.
